# EUROPÄISCHE PATENTSCHRIFT

(11) **EP 3 405 665 B1**
(45) Veröffentlichungstag und Bekanntmachung des Hinweises auf die Patenterteilung: **20.01.2021**
(21) Anmeldenummer: 16801512.1
(22) Anmeldetag: 28.11.2016
(51) Int. Cl.: F02M 25/022

(54) **VERFAHREN UND VORRICHTUNG ZUM STEUERN ODER REGELN DER MENGE EINES KRAFTSTOFFGEMISCHS**
METHOD AND DEVICE FOR THE OPEN-LOOP OR CLOSED-LOOP CONTROL OF THE AMOUNT OF A FUEL MIXTURE
PROCÉDÉ ET DISPOSITIF DE COMMANDE OU DE RÉGULATION DE LA QUANTITÉ D'UN MÉLANGE DE CARBURANT

(30) Priorität: 20.01.2016 DE 102016200751
(43) Veröffentlichungstag der Anmeldung: 28.11.2018
(73) Patentinhaber: Bayerische Motoren Werke Aktiengesellschaft, 80809 München (DE)
(72) Erfinder: BARTELT, Hans-Christian, 80807 München (DE)
(86) Internationale Anmeldenummer: PCT/EP2016/078931
(87) Internationale Veröffentlichungsnummer: WO 2017/125185

(56) Entgegenhaltungen:
- DE-A1-102010 011 915
- US-A- 4 430 251
- US-A1- 2002 005 177
- US-B1- 6 240 883

## Beschreibung

Die Erfindung hat Verfahren zum Steuern oder Regeln der Menge von Wasser zum Gegenstand, die einem Kraftstoff beigemischt wird, bevor er der Kraftstoffhochdruckpumpe eines Verbrennungsmotors zugeführt wird, und sie umfasst auch eine Vorrichtung, die sich zum Durchführen dieses Verfahrens eignet.

Bei Verbrennungsmotoren werden permanent erhebliche technische Fortschritte erzielt. Kennzeichnend dafür sind die stetige Erhöhung der spezifischen Leistung bei gleichzeitiger Reduzierung des Kraftstoffverbrauches und die Minderung der Menge der ausgestoßenen Schadstoffe. Derzeit gilt insbesondere der Ottomotor als eine der wirtschaftlichsten und umweltverträglichsten thermischen Kraftmaschinen.

Dabei regeln moderne Kraftstoff-Einspritzanlagen den Kraftstoff-Einspritzzeitpunkt und die Kraftstoff-Einspritzmenge z.B. mittels der Daten des Luftmassenmessers, dem anliegenden Ladedruck und unter zusätzlicher Berücksichtigung der Abgastemperatur und weiterer Messwerte. Diese Motorsteuerung betätigt dafür elektrisch ein Ventil je Zylinder (zylinderindividuell), nämlich den Injektor, der die konventionellen Einspritzdüsen klassischer Benzinaggregate ersetzt.

Der Einsatz von wasserhaltigen Kraftstoffen stellt eine Möglichkeit dar, insbesondere den Ottomotor auch für zukünftige Herausforderung zu rüsten (bspw. im Hinblick auf verschärfte Abgasgesetzgebung), denn die Wassereinspritzung in den Kraftstoff ist ein Verfahren, das zum Erreichen der Ziele der Leistungssteigerung oder Verbrauchsreduktion und einem geringeren Schadstoffausstoß beitragen kann.

Durch die Einspritzung von Wasser kann aufgrund der im Vergleich zu Benzin hohen Verdampfungsenthalpie die Temperatur des Frischgases vor der Verbrennung verringert und damit die Klopfgrenze zu früheren Schwerpunktlagen hin verschoben und der Vollastverbrauch verringert oder das Verdichtungsverhältnis zur Optimierung des Teillastverbrauchs angehoben werden.

Da Benzinkraftstoff und Wasser schlecht mischbar sind, gibt es im Stand der Technik unterschiedliche Verfahren, eine Emulsion für KFZ-Motoren herzustellen: Einerseits gibt es Verfahren, Kraftstoff-Wasser-Emulsionen vorab bereitzustellen. Das Wasser kann dafür mit einer geringen Kraftstoffmenge vermischt werden, und das Gemisch wird im Betrieb gleichzeitig mit der Hauptkraftstoffmenge zur Einspritzdüse gefördert und in den Brennraum eingespritzt. Alternativ kann durch Beifügung von Tensiden eine stabile Mikroemulsion hergestellt werden. Weiterhin kann eine Beimischung von Methanol in den Kraftstoff vorteilhaft sein.

Andererseits kann die Emulsion erst bei Bedarf, also On-Board im Fahrzeug, erzeugt werden, und von einer solchen "On-Board" gemischten Emulsion geht die Anmeldung aus. Diese hat gegenüber den vorgemischten Emulsionen den Vorteil, dass der Wassergehalt des Kraftstoffs während des Motorbetriebs bedarfsgerecht eingestellt werden kann, und die aktuell erforderliche Menge und Zusammensetzung der Wasser-Treibstoff-Emulsion kann dann der Kraftstoffhochdruckpumpe bzw. der Commonrail-Einspritzanlage zugeführt werden.

Die Vermischung von Kraftstoff mit Wasser kann im Übrigen auch unmittelbar am Injektor erfolgen, denn je näher der Vermischungsort an der Brennkammer liegt, um so geringer wird die Zeitspanne zwischen Emulsionserzeugung und Bereitstellung und damit die "Totzeit".

Für die Wassereinspritzung findet im Stand der Technik eine Wasserpumpe Verwendung, mit der die dem Kraftstoff beizumischende Wassermenge bedarfsgerecht gefördert werden kann. Andererseits beschreibt die DE 10 2010 011915 A1 ein Beispiel eines Kraftstoff-Zufuhrsystems, das eine Kraftstoff/Wasser-Abgabevorrichtung aufweist.

Aufgabe der Erfindung ist es, ein einfach zu realisierendes Verfahren und eine einfach aufgebaute Vorrichtung zum Steuern oder Regeln der dem Kraftstoff beigemischten Wassermenge zu schaffen.

Die Erfindung löst die Aufgabe in einem ersten Aspekt durch ein Verfahren zum Steuern oder Regeln der Menge von Wasser, die einem Kraftstoff beigemischt wird, bevor er dem Mengensteuerventil der Kraftstoffhochdruckpumpe eines Verbrennungsmotors zugeführt wird. Dieses Verfahren umfasst das Aufspalten der Kraftstoffzufuhr zur Kraftstoffhochdruckpumpe in einen ersten Zweig mit einem Venturi-Rohr im Kraftstoffpfad hinter der Kraftstoff-Vorförderpumpe (elektrische Kraftstoffpumpe), das einen Unterdruckanschluss aufweist, und in einen zweiten Zweig mit einem Sperrventil. Über eine Wasser-Zuleitung erfolgt das Zuführen von Wasser an den Unterdruckanschluss des Venturi-Rohrs. Das Steuern oder Regeln der durch das Venturi-Rohr angesaugten Wassermenge wird dadurch bewirkt, dass zum Erhöhen der Wassermenge im ersten Zweig der Kraftstofffluss im zweiten Zweig durch Schließen des Sperrventils (worunter auch ein nicht vollständiges Schließen fällt) gemindert wird, und dass zum Verringern der Wassermenge im ersten Zweig der Kraftstofffluss im zweiten Zweig durch Öffnen des Sperrventils (worunter auch teilweises oder weiteres Öffnen fällt) erhöht wird. Der Kraftstoff im zweiten Zweig und das Kraftstoff-Wasser-Gemisch im ersten Zweig werden dann zum Mengensteuerventil der Kraftstoffhochdruckpumpe gefördert.

Ein zweiter Aspekt der Erfindung ist eine Vorrichtung zum Beimischen einer gesteuerten oder geregelten Menge von Wasser in die Kraftstoffzufuhr eines Verbrennungsmotors, der eine Kraftstoffhochdruckpumpe mit einem Mengensteuerventil umfasst. Die Vorrichtung weist eine zum Mengensteuerventil führende Kraftstoffzufuhrleitung auf, die in einen ersten Zweig und einen zweiten Zweig verzweigt. Im ersten Zweig ist ein Venturi-Rohr vorgesehen, das einen Unterdruckanschluss aufweist, und im zweiten Zweig gibt es ein regelbares Sperrventil. Weiterhin ist eine Wasser-Zuleitung vorgesehen, die an den Unterdruckanschluss des Venturi-Rohrs angeschlossen ist, sowie Verbindungen des ersten und des zweiten Zweigs der Kraftstoffzufuhrleitung zum Mengensteuerventil der Kraftstoffhochdruckpumpe.

Mit der Erfindung wird die im Stand der Technik vorgesehene Wasserpumpe im Kraftstoffzuführstrang eingespart. Sie wird ersetzt durch ein Venturi-Rohr, das keine mechanisch beweglichen Teile aufweist, und durch ein Sperrventil, für das es im Stand der Technik gut geeignete und insbesondere robuste Ausführungsarten gibt. Dadurch verringert sich die Komplexität des Systems der Wassereinspritzung erheblich.

Weitere Vorteile bieten Ausführungsarten des beanspruchten Verfahrens bzw. der beanspruchten Vorrichtung.

Gegenüber einer kontinuierlichen Regelung des Sperrventils ist eine getastete Regelung mit hinreichend hoher Frequenz besonders einfach und robust.

Werden das Wasser-Kraftstoff-Gemisch im ersten Zweig und der Kraftstoff im zweiten Zweig über getrennte Zuleitungen zum Mengensteuerventil der Kraftstoffhochdruckpumpe geführt, so ergibt sich wegen der geringen Totvolumina eine besonders schnelle Reaktionsfähigkeit des Systems bei sich ändernden Anforderungen.

Ein Absperrventil zum kompletten (oder teilweisen) Absperren des ersten Zweigs mit dem Venturi-Rohr ermöglicht einen schnellen Übergang zwischen dem Betrieb mit und ohne Wassereinspritzung.

Das erfindungsgemäße Verfahren und die erfindungsgemäße Vorrichtung werden insbesondere bei Benzinkraftstoff eingesetzt.

In der Zeichnung zeigt:

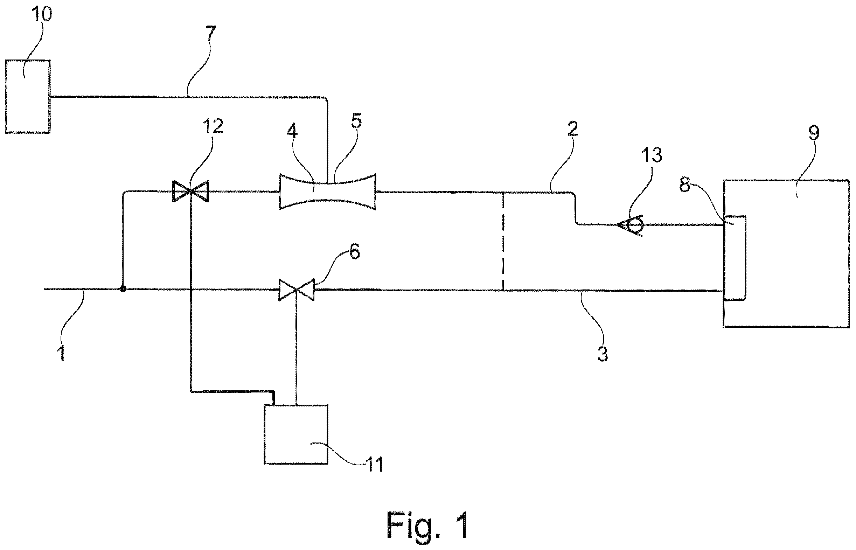

Fig. 1 eine Ausführungsart der Vorrichtung gemäß der Erfindung, mit der das erfindungsgemäße Verfahren durchgeführt wird.

In Figur 1 ist das Kraftstoffzuführsystem eines Fahrzeug-Verbrennungsmotors, vorzugsweise eines Ottomotors, schematisch und auszugshaft gezeigt.

Eine Kraftstoffzuführleitung 1 ist mit einem hier nicht dargestellten Kraftstofftank, vorzugsweise einen Benzintank, verbunden.

Die Kraftstoffzuführleitung 1 spaltet sich in zwei Zweige auf, nämlich einen ersten Zweig 2 und einen zweiten Zweig 3. Im ersten Zweig 2 ist ein Venturi-Rohr 4 mit einem Unterdruckanschluss 5 und im zweiten Zweig 3 ein Sperrventil 6 vorhanden.

An den Unterdruckanschluss 5 ist eine Wasser-Zuleitung 7 angeschlossen, über die hochreines oder destilliertes Wasser aufs einen Wassertank 10 angesaugt und im Venturi-Rohr 4 mit dem dort fließenden Kraftstoff vermischt wird.

Der erste und der zweite Zweig 2 bzw. 3 können sich nach dem Venturi-Rohr 4 wieder vereinigen, wie mit der unterbrochenen Leitung gezeigt, oder getrennt zum Mengensteuerventil 8 einer Hochdruckpumpe 9 führen.

Das Sperrventil 6 wird von einem Prozessor 11, welcher Teil der Motorsteuerung sein kann, angesteuert.

Optional sitzt vor oder nach dem Venturi-Rohr 4 ein Absperrventil 12, welches den ersten Zweig 2 vollständig oder teilweise, in Stufen oder stufenlos absperren kann sowie ein Rückschlagventil 13, das ggf. ein Rückströmen von Kraftstoff in den Wasserzulaufbereich verhindert. Das Rückschlagventil kann auch in der Wasserzulaufleitung 7 positioniert sein.

Je höher der Durchfluss des Kraftstoffs im ersten Zweig 2 ist, umso größer ist der Unterdruck, den das Venturi-Rohr 4 in der Wasser-Zuleitung 7 erzeugt, und umso größer ist damit auch die Menge des angesaugten Wassers. Diese Wirkung wird zur Steuerung oder Regelung der zugeführten Wassermenge genutzt.

Die in die Kraftstoffleitung 1 einfließende Gesamtmenge Kraftstoff wird durch den aktuellen Kraftstoffbedarf des Verbrennungsmotors vorgegeben und ist für die nachfolgende Betrachtung als konstant anzusehen. Diese durchfließende Menge teilt sich im umgekehrten Verhältnis der Strömungswiderstände in den Zweigen 2 und 3 auf. Je größer aber der Durchfluss durch den ersten Zweig 2 ist, umso größer ist auch die angesaugte Wassermenge. Umgekehrt wird die Menge des angesaugten Wassers gemindert, wenn ein größerer Teil des Kraftstoffs durch den zweiten Zweig 3 fließt.

Das Sperrventil 6 dient zur elektronischen Beeinflussung des Durchflussverhältnisses und damit des Wasseranteils im Kraftstoff. Dafür kann das Sperrventil 6 kontinuierlich oder auch getaktet betrieben werden, wobei in letzterem Fall das Tastverhältnis den Durchfluss im zweiten Zweig 3, damit den Durchfluss im ersten Zweig 2 und damit die Wassermenge bestimmt.

Ändert sich der Kraftstoffbedarf und damit der Durchfluss durch die beiden Zweige 2 und 3, so muss die Einstellung des Sperrventils 6 im Allgemeinen daran angepasst werden, um einen bedarfsgerechten Wasseranteil einzustellen. Dem Prozessor 11 ist dies auf der Basis von Tabellen und ggf. ergänzt durch Messwerte aus dem Prozess möglich. Für geeignete Messwerte gibt es verschiedene Möglichkeiten. Eine Möglichkeit ist ein direktes Messen der Wasserzufuhr durch die Wasser-Zuleitung 7, aber auch indirekte Messungen, z.B. unmittelbare Messungen am Motor oder auch standardmäßig bereits vorhandene Motormessgrößen können hierfür optimal sein.

Schließlich wird der Kraftstoff aus dem zweiten Zweig 3 und das Kraftstoff-Wasser-Gemisch aus dem ersten Zweig 2 zum Mengensteuerventil 8 der Kraftstoffhochdruckpumpe 9 und damit zu den Einspritzdüsen des Motors geführt. Dafür können beide Zweige zunächst wieder zusammengeführt werden und als Gesamtleitung die Kraftstoffhochdruckpumpe 9 erreichen. Oder das Mengensteuerventil 8 hat, wie in der Ausführungsform, die in Figur 1 dargestellt ist, zwei Anschlüsse für die beiden Zweige 2 und 3, und erst dort gibt es eine Vermischung der durch die beiden Zweige 2, 3 geführten Flüssigkeiten.

Beigemischtes Wasser im Kraftstoff kann - nicht zuletzt wegen der Leistungssteigerung des Motors - zu einem erhöhten Verschleiß und zu anderen nachteiligen Wirkungen führen. Auch kann im Teillastbereich des Motors die Schadstoffentwicklung so niedrig sein, dass eine weitere Reduzierung durch Wasserbeimischung in den Kraftstoff nicht erforderlich ist. Daher ist es vorteilhaft, dass die Wasserbeimischung vollständig unterbunden werden kann und nur erfolgt, wenn temporär eine besonders hohe Motorleistung gefordert wird, beim PKW z.B. während eines Überholvorgangs. Auch bei fast leerem Wassertank sollte eine Wasserbeimischung nicht mehr erfolgen.

Für dieses vollständige Unterbinden der Wasserbeimischung sieht die Ausführungsart gemäß Figur 1 das Absperrventil 12 vor, das den ersten Zweig 2 vollständig schließt.

## Patentansprüche

1. Verfahren zum Steuern oder Regeln der Menge von Wasser, die einem Kraftstoff beigemischt wird, bevor er der Kraftstoffhochdruckpumpe (9) eines Verbrennungsmotors zugeführt wird, mit den Merkmalen:
• Aufspalten der Kraftstoffzufuhr zur
Kraftstoffhochdruckpumpe (9) in einen ersten Zweig (2) mit einem Venturi-Rohr (4), das einen Unterdruckanschluss (5) aufweist, und in einen zweiten Zweig (3) mit einem Sperrventil (6),
• Zuführen von Wasser an den Unterdruckanschluss (5) des Venturi-Rohrs (4) über eine Wasser-Zuleitung (7),
• Steuern oder Regeln der durch das Venturi-Rohr (4) angesaugten Wassermenge, indem zum Erhöhen der Wassermenge im ersten Zweig (2) der Kraftstofffluss im zweiten Zweig (3) durch Schließen des Sperrventils (6) gemindert und zum Verringern der Wassermenge im ersten Zweig (2) der Kraftstofffluss im zweiten Zweig (3) durch Öffnen des Sperrventils (6) erhöht wird, und
• Zuführen des Kraftstoff-Wasser-Gemischs im ersten (2) und des Kraftstoffs im zweiten Zweig (3) zum Mengensteuerventil (8) der Kraftstoffhochdruckpumpe (9).

2. Verfahren nach Anspruch 1, **dadurch gekennzeichnet, dass** das Sperrventil (6) den Kraftstoffdurchfluss im zweiten Zweig (3) kontinuierlich mindert.

3. Verfahren nach Anspruch 1, **dadurch gekennzeichnet, dass** das Sperrventil (6) den Kraftstoffdurchfluss im zweiten Zweig (3) getaktet mindert.

4. Verfahren nach einem der Ansprüche 1 bis 3, wobei das Wasser-Kraftstoff-Gemisch im ersten Zweig (2) hinter dem Sperrventil (6) wieder in den zweiten Zweig (3) der Kraftstoffleitung zurückgeführt wird.

5. Verfahren nach einem der Ansprüche 1 bis 3, wobei das Wasser-Kraftstoff-Gemisch des ersten Zweigs (2) und der Kraftstoff des zweiten Zweigs (3) über getrennte Zuleitungen zur Kraftstoffhochdruckpumpe (9) geführt werden.

6. Verfahren nach einem der Ansprüche 1 bis 5, wobei als Wasser destilliertes Wasser aus einem Wassertank (10) Verwendung findet.

7. Verfahren nach einem der Ansprüche 1 bis 6, wobei das Steuern oder Regeln der Wassermenge dadurch erfolgt, dass ein Prozessor (11) das Sperrventil (6) auf der Basis von Prozessdaten öffnet oder schließt.

8. Vorrichtung zum Beimischen einer gesteuerten oder geregelten Menge von Wasser in die Kraftstoffzufuhr eines Verbrennungsmotors, wobei der Verbrennungsmotor eine Kraftstoffhochdruckpumpe (9) umfasst, mit einer zur Kraftstoffhochdruckpumpe (9) bzw. zum Mengensteuerventil (8) führenden Kraftstoffzufuhrleitung (1), die in einen ersten Zweig (2) und einen zweiten Zweig (3) verzweigt,
einem Venturi-Rohr (4) im ersten Zweig (2), wobei das Venturi-Rohr einen Unterdruckanschluss (5) aufweist,
einem regelbaren Sperrventil (6) im zweiten Zweig (3), und
einer Wasser-Zuleitung (7), die an den Unterdruckanschluss (5) des Venturi-Rohrs (4) angeschlossen ist.

9. Vorrichtung nach Anspruch 8 mit einem Absperrventil (12) im ersten Zweig vor dem Venturi-Rohr (4).

## Claims

1. Method for the open-loop or closed-loop control of the amount of water which is added to a fuel before said fuel is supplied to the high-pressure fuel pump (9) of an internal combustion engine, comprising the features:
• splitting the fuel supply to the high-pressure fuel pump (9) into a first branch (2) with a Venturi tube (4), which has a negative pressure connection (5), and into a second branch (3) with a stop valve (6),
• supplying water to the negative pressure connection (5) of the Venturi tube (4) via a water supply line (7),
• controlling, by open-loop or closed-loop control, the amount of water sucked up by the Venturi tube (4) by, in order to increase the amount of water in the first branch (2), reducing the fuel flow in the second branch (3) by closing the stop valve (6) and, in order to reduce the amount of water in the first branch (2), increasing the fuel flow in the second branch (3) by opening the stop valve (6), and
• supplying the fuel-water mixture in the first branch (2) and the fuel in the second branch (3) to the quantity control valve (8) of the high-pressure fuel pump (9).

2. Method according to Claim 1, **characterized in that** the stop valve (6) continuously reduces the fuel flow rate in the second branch (3).

3. Method according to Claim 1, **characterized in that** the stop valve (6) reduces the fuel flow rate in the second branch (3) in a clocked manner.

4. Method according to one of Claims 1 to 3, wherein the water-fuel mixture in the first branch (2) is returned again downstream of the stop valve (6) into the second branch (3) of the fuel line.

5. Method according to one of Claims 1 to 3, wherein the water-fuel mixture of the first branch (2) and the fuel of the second branch (3) are guided via separate supply lines to the high-pressure fuel pump (9).

6. Method according to one of Claims 1 to 5, wherein distilled water from a water tank (10) is used as the water.

7. Method according to one of Claims 1 to 6, wherein the amount of water is controlled by open-loop or closed-loop control by a processor (11) opening or closing the stop valve (6) on the basis of process data.

8. Device for adding an open-loop-controlled or closed-loop-controlled amount of water into the fuel supply of an internal combustion engine, wherein the internal combustion engine comprises a high-pressure fuel pump (9), with a fuel supply line (1) which leads to the high-pressure fuel pump (9) or to the quantity control valve (8) and divides into a first branch (2) and a second branch (3),
a Venturi tube (4) in the first branch (2), wherein the Venturi tube has a negative pressure connection (5),
an adjustable stop valve (6) in the second branch (3), and
a water supply line (7) which is connected to the negative pressure connection (5) of the Venturi tube (4).

9. Device according to Claim 8 with a shut-off valve (12) in the first branch upstream of the Venturi tube (4) .

## Revendications

1. Procédé de commande ou de régulation de la quantité d'eau qui est ajoutée à un carburant avant que celui-ci ne soit amené à la pompe à carburant à haute pression (9) d'un moteur à combustion interne, le procédé comprenant les caractéristiques suivantes :
• diviser l'amenée de carburant à la pompe à carburant à haute pression (9) en une première branche (2) munie d'un tube de Venturi (4), qui comporte un raccord de dépression (5), et une deuxième branche (3) munie d'une vanne d'arrêt (6),
• amener de l'eau au raccord de dépression (5) du tube de Venturi (4) par le biais d'une conduite d'amenée d'eau (7),
• commander ou réguler la quantité d'eau aspirée à travers le tube de Venturi (4) par réduction du débit de carburant dans la deuxième branche (3) par fermeture de la vanne d'arrêt (6) pour augmenter la quantité d'eau dans la première branche (2) et par augmentation du débit de carburant dans la deuxième branche (3) par ouverture de la vanne d'arrêt (6) pour réduire la quantité d'eau dans la première branche (2), et
• amener le mélange carburant-eau dans la première branche (2) et le carburant dans la deuxième branche (3) à la vanne de commande de quantité (8) de la pompe à carburant à haute pression (9).

2. Procédé selon la revendication 1, **caractérisé en ce que** la vanne d'arrêt (6) réduit en continu le débit de carburant dans la deuxième branche (3).

3. Procédé selon la revendication 1, **caractérisé en ce que** la vanne d'arrêt (6) réduit le débit de carburant dans la deuxième branche (3) de manière cadencée.

4. Procédé selon l'une des revendications 1 à 3, le mélange eau-carburant dans la première branche (2) étant ramené dans la deuxième branche (3) de la conduite de carburant en aval de la vanne d'arrêt (6).

5. Procédé selon l'une des revendications 1 à 3, le mélange eau-carburant de la première branche (2) et le carburant de la deuxième branche (3) étant amenés à la pompe à carburant à haute pression (9) par le biais de conduites d'amenée séparées.

6. Procédé selon l'une des revendications 1 à 5, l'eau utilisée étant de l'eau distillée provenant d'un réservoir d'eau (10).

7. Procédé selon l'une des revendications 1 à 6, la commande ou la régulation de la quantité d'eau étant effectuée par un processeur (11) qui ouvre ou ferme la vanne d'arrêt (6) sur la base de données de processus.

8. Dispositif d'ajout d'une quantité d'eau commandée ou régulée à l'amenée de carburant d'un moteur à combustion interne, le moteur à combustion interne comprenant une pompe à carburant à haute pression (9), ledit dispositif comprenant
une conduite d'amenée de carburant (1) qui mène à la pompe à carburant à haute pression (9) ou à la vanne de commande de quantité (8) et qui se ramifie en une première branche (2) et une deuxième branche (3),
un tube de Venturi (4) situé dans la première branche (2), le tube de Venturi comportant un raccord de dépression (5),
une vanne d'arrêt (6), pouvant être régulée, située dans la deuxième branche (3), et
une conduite d'amenée d'eau (7) qui est raccordée au raccord de dépression (5) du tube de Venturi (4).

9. Dispositif selon la revendication 8 comprenant une vanne d'arrêt (12) située dans la première branche en amont du tube de Venturi (4).
